# EUROPÄISCHE PATENTSCHRIFT

(11) **EP 1 607 244 B1**
(45) Veröffentlichungstag und Bekanntmachung des Hinweises auf die Patenterteilung: **28.02.2007**
(21) Anmeldenummer: 05105208.2
(22) Anmeldetag: 14.06.2005
(51) Int. Cl.: B60C 23/00

(54) **Reifendruckeinstellanlage**
Device for adjusting the tire pressure
Dispositif de réglage d'une pression d'un pneu

(30) Priorität: 19.06.2004 DE 102004029736
(43) Veröffentlichungstag der Anmeldung: 21.12.2005
(73) Patentinhaber: DEERE & COMPANY, Moline, Illinois 61265-8098 (US)
(72) Erfinder: Nordhoff, Hendrik, 48329 Havixbeck (DE)
(74) Vertreter: Holst, Sönke

(56) Entgegenhaltungen:
- GB-A- 663 265
- GB-A- 1 550 537

## Beschreibung

Die Erfindung betrifft eine Reifendruckeinstellanlage zum Einstellen des Drucks eines an einem Fahrzeug montierten Reifens. Es ist eine dem Fahrzeug zugeordnete Druckquelle und mindestens eine Verbindungsleitung vorgesehen, mit welcher die Druckquelle mit einem Reifen verbindbar ist. Der Reifen ist auf eine Felge montierbar. Innerhalb des von dem Reifen und der Felge gebildeten Raums bzw. zwischen der Felge und dem Reifen ist ein Unterteilungsmittel vorgesehen, mit welchem das Reifenvolumen in zwei Kammern unterteilbar ist.

Insbesondere landwirtschaftliche Fahrzeuge, wie Traktoren, Mähdrescher und Anhänger sowie vergleichbare Fahrzeuge, die auf nachgiebigem Boden eingesetzt werden, sind häufig mit großvolumigen Reifen ausgestattet, um eine gute Geländegängigkeit, gute Traktionseigenschaften und einen geringen Bodendruck zu erreichen. Traktion und Bodendruck sind besonders niedrig, wenn ein niedriger Luftdruck in den Reifen eingestellt ist, so dass im Feld ein Betrieb bei niedrigem Reifendruck bevorzugt wird. Allerdings sinkt mit abnehmendem Reifendruck das Tragvermögen der Reifen, und es nehmen der Rollwiderstand und der Reifenverschleiß zu. Daher sollte bei Transportfahrten auf unnachgiebigem Boden ein hoher Luftdruck gewählt werden. Um diesen konträren Forderungen zu genügen, werden Reifendruckeinstell- bzw. Reifendruckregelanlagen verwendet, wie sie beispielsweise aus der DE 198 04 249 A1 oder der US 5,647,927 hervorgehen. Mit Hilfe einer Reifendruckregelanlage lässt sich der Reifenluftdruck optimal an die Erfordernisse des jeweiligen Arbeitseinsatzes anpassen. Der zum Befüllen der Reifen erforderliche Luftdruck bei diesen Reifendruckregelanlagen wird durch einen Kompressor bereitgestellt, der einen Luftdruckbehälter speist.

Ganz allgemein - und insbesondere im Sinn der vorliegenden Erfindung - wird zum Erzeugen eines vorgebbaren Drucks der von dem Reifen und der Felge gebildete Raum mit Gas gefüllt, beispielsweise mit Luft. Daher kann es sich bei der Druckquelle um einen Kompressor handeln, welcher Umgebungsluft ansaugt und verdichtet und dem vom Reifen und Felge gebildeten Raum zuleitet.

Weiterhin ist ein Stand der Technik bekannt, ein Notlaufsystem für Fahrzeugreifen vorzusehen, mit welchem zumindest eine beschränkte Fahrt auch dann möglich ist, wenn ein Reifen platzen sollte. Ein solches Notlaufsystem wird beispielsweise durch einen Schlauch gebildet, welcher zwischen dem Felgenbett und dem Reifen angeordnet ist. Falls ein Reifen platzen sollte, ist eine Fahrt auf diesem Schlauch möglich. Ein Unterteilungsmittel im Sinn der vorliegenden Erfindung kann durch einen Schlauch in einem Reifen gebildet werden. So ist beispielsweise aus der GB 2 258 195 A für sich gesehen ein solches Reifen-Notlaufsystem bekannt, welches mit einer Art Reifendruckeinstellanlage gekoppelt ist, welche ein Mittel umfasst, mit welchem Gas bzw. Luft zur Verfügung gestellt werden soll. Dieses kann ein Mittel, beispielsweise eine Pumpe, aufweisen, wobei dieses Mittel an dem Rad oder an einer festen Position des Fahrzeugs angebracht sein kann. Dieses Reifen-Notlaufsystem ist derart ausgelegt, dass der Reifendruck im Wesentlichen konstant gehalten werden soll.

Eine gattungsgemäße Reifendruckeinstellanlage ist ferner aus der GB 1550537 bekannt.

Ein Einstellen eines anderen Reifendrucks dauert bei einem großen Reifenvolumen - wie es bei landwirtschaftlichen Fahrzeugen üblich ist - in nachteiliger Weise sehr lang, da ein großes Gasvolumen in oder aus dem Reifen zu befördern ist, wobei in einer Zeiteinheit nur ein begrenzter Gasstrom durch ein Ventil eines Reifens geleitet werden kann, insbesondere wenn ein herkömmliches Ventil vorgesehen ist.

Der vorliegenden Erfindung liegt daher die Aufgabe zugrunde, eine Reifendruckeinstellanlage der eingangs genannten Art anzugeben und weiterzubilden, durch welches die vorgenannten Probleme überwunden werden. Insbesondere soll die Zeitdauer für eine Veränderung des Reifendrucks verringert werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist eine Reifendruckeinstellanlage der eingangs genannten Art dadurch gekennzeichnet, dass ein Begrenzungsmittel vorgesehen ist, mit welchem eine Volumenausdehnung einer Kammer auf einen maximal vorgebbaren Volumenwert begrenzbar ist, und dass zur Veränderung des Drucks eines Reifens lediglich der Druck in einer der zwei Kammern zu verändern ist.

Erfindungsgemäß ist zunächst erkannt worden, dass eine Reduktion des auszutauschenden Gasvolumens bei einer Druckveränderung des Reifens dann erzielbar ist, wenn in dem von Reifen und Felge gebildeten Raum ein Unterteilungsmittel vorgesehen ist, wobei jedoch ein Begrenzungsmittel vorgesehen ist mit welchem eine Volumenausdehnung auf einen vorgebbaren Volumenwert nach oben begrenzbar ist. Hierdurch kann nämlich zur Veränderung des Reifendrucks lediglich Gas bzw. Luft aus einer der beiden Kammer abgelassen werden. Falls nun hierdurch der Druck in dieser Kammer unter den Druck der anderen Kammer fällt, wird durch das Begrenzungsmittel eine Ausdehnung des Volumens der anderen Kammer begrenzt, so dass ab dem maximalen Volumen der anderen Kammer sich nicht mehr ein Mittelwert bezüglich Volumen und Druck in den beiden Kammern einstellt. Hierdurch kann eine Verringerung des Luftdrucks in der einen Kammer unabhängig von Volumen und Luftdruck in der anderen Kammer bewirkt werden, so dass im Ergebnis der Reifendruck unmittelbar durch ein Verändern des Drucks in der einen Kammer erzielt werden kann. Somit kann zur Variation des Reifendrucks lediglich das Gasvolumen der einen Kammer variiert werden, wodurch in ganz besonders vorteilhafter Weise das auszutauschende Gasvolumen bei einer Druckveränderung des Reifens verringert ist und die Dauer einer Druckveränderung verkürzt werden kann. Hierdurch wird letztendlich auch Energie gespart, da für ein mit Energieaufwand verbundenes Erhöhen des Drucks in einer Kammer aufgrund des verringerten Reifenvolumens weniger Luft bewegt werden muss. Durch die Druckverhältnisse in den Kammern ist die Elastizität bzw. die Federkennlinie des Rads festgelegt. Mit der erfindungsgemäßen Reifendruckeinstellanlage kann daher in besonders vorteilhafter Weise der Luftdruck und/oder die Federkennlinie des Rads auf den aktuell vorliegenden Einsatz des Fahrzeugs eingestellt werden.

In einer bevorzugten Ausführungsform weist das Unterteilungsmittel einen Schlauch auf. Dieser Schlauch könnte beispielsweise aus einem elastischen Material gefertigt sein oder zumindest ein elastisches Material aufweisen, wobei insbesondere Gummi vorgesehen ist. Der Schlauch könnte jedoch auch aus einem luftdichten Gewebematerial gefertigt sein. Hierbei wirkt das Gewebematerial gleichzeitig als Begrenzungsmittel, so dass die Materialkosten für diese Ausführungsform in vorteilhafter Weise gering sind. Auch verändert sich hierdurch die Montage eines Schlauchs und eines Reifens auf einer Felge nicht grundsätzlich. Gleiches gilt für die Bauweise von Reifen und Felgen.

Alternativ hierzu könnte das Unterteilungsmittel ein Vollmaterial aufweisen. Das Vollmaterial könnte aus einem elastischen Material, insbesondere aus Gummi, gefertigt sein. Die Montage des Reifens auf die Felge bzw. des Rads wird hierdurch nicht wesentlich erschwert. So könnte das als Vollmaterial ausgebildete Unterteilungsmittel zunächst in den Reifen eingebracht werden. Dann wird der Reifen samt dem Unterteilungsmittel auf die Felge aufgebracht.

Das Vollmaterial könnte Poren aufweisen oder schwammförmig ausgebildet sein. Insoweit weist dieses Voll- bzw. Verbundmaterial andere Elastizitätseigenschaften und dementsprechend eine andere Federkennlinie auf. So kann durch eine geeignete Auswahl des Voll- bzw. Verbundmaterials eine für den Einsatz des Fahrzeugs geeignete Kennlinie des Rads für den Zustand des Rads eingestellt werden, in welchem die andere Kammer nahezu luftleer oder drucklos ist und in welchem die Gesamtkennlinie des Rads im Wesentlichen dann der des Voll- bzw. Verbundmaterials entspricht.

Bevorzugt ist das Unterteilungsmittel im Wesentlichen torusförmig ausgebildet. So könnte das Unterteilungsmittel beispielsweise wie ein herkömmlicher Reifenschlauch gefertigt sein, was eine kostengünstige Herstellung der erfindungsgemäßen Reifendruckeinstellanlage ermöglicht. Das Unterteilungsmittel könnte an der Felge angeordnet und/oder daran befestigbar sein.

In einer ganz besonders bevorzugten Ausführungsform weist das Begrenzungsmittel ein Netz oder ein Gewebe einer vorgebbaren maximalen Größe auf. Hiermit ist eine wirksame Volumenausdehnung über den maximalen Volumenwert der Kammer nicht mehr möglich, nämlich beispielsweise die Kammer, welche vollständig von dem Netz oder dem Gewebe umgeben ist. Dementsprechend könnte das Unterteilungsmittel zumindest bereichsweise von dem Begrenzungsmittel umgeben sein. Eine Ausbildung eines Begrenzungsmittels in Form eines Netzes oder eines Gewebes ist in vorteilhafter Weise kostengünstig möglich.

Bevorzugt ist in einer durch das Unterteilungsmittel gebildeten Kammer der Druck im Wesentlichen unveränderbar und könnte einem üblichen Reifendruck für eine Straßenfahrt entsprechen. Dementsprechend wird bei einer Veränderung des Reifendrucks der Druck in der anderen Kammer variiert. Die Kammer mit dem im Wesentlichen unveränderten Druck könnte an der Felge angeordnet sein. In diesem Fall wäre zur Veränderung des Reifendrucks der Druck der äußeren Kammer zu variieren. Die Felge wäre bei niedrigem Gasdruck des Rads in vorteilhafter Weise hierdurch weitgehend vor Beschädigungen geschützt, da die sozusagen innere Kammer stets einen Mindestdruck aufweist und dementsprechend die Felge bzw. der Reifen darauf abrollen kann, ohne dass die Felge - auch bei Stößen oder Unebenheiten - unmittelbar mit dem Untergrund in Berührung kommt.

In einer ganz besonders bevorzugten Ausführungsform ist eine Veränderung des Reifendrucks durch ein Befüllen oder Entleeren der zwischen dem Unterteilungsmittel und dem Reifen angeordneten Kammer erzielbar. Mit anderen Worten wird der Druck der - bezüglich der Felge - äußeren Kammer variiert, wobei der Druck und unter Umständen das Volumen der inneren Kammer unverändert bleibt, nämlich dann, wenn das Begrenzungsmittel ein weiteres Ausdehnen der inneren Kammer bei den bestehenden Druckverhältnissen verhindert.

Obwohl zur Veränderung des Drucks eines Reifens lediglich der Druck in einer der zwei Kammern zu verändern ist, ist in einer bevorzugten Ausführungsform auch vorgesehen, dass zur Veränderung des Reifendrucks oder der Druckverhältnisse in den zwei Kammern Luft aus der einen Kammer in die andere Kammer geleitet wird. Hierdurch kann auch ohne wesentlichen Energieaufwand in vorteilhafter Weise der Luftdruck der beiden Kammern aneinander angenähert werden, indem nämlich zumindest teilweise ein Druckausgleich zwischen der Kammer mit dem höheren Druck zur Kammer mit dem niedrigeren Druck herbeigeführt werden kann. Da sich hierbei im Allgemeinen die Federeigenschaften der beiden Kammern ändern, ändert sich auch die Federeigenschaft des gesamten Reifens.

Nun könnte jeder Kammer ein Ventil zugeordnet sein, über welches der Druck in der jeweiligen Kammer veränderbar ist. Insoweit kommt es unter Umständen auf die vorliegenden Druckverhältnisse oder Volumenverhältnisse in den zwei Kammern sowie auf die konkrete Ausgestaltung des Begrenzungsmittels an, welche der beiden Kammern in diesem Zustand zu entleeren oder zu befüllen sinnvoll ist. Hierzu könnte eine Steuereinrichtung und ein in oder an jeder Kammer angeordneter Drucksensor vorgesehen sein, wobei die Drucksensoren den Druck der ihr jeweils zugeordneten Kammer detektieren und das Detektionsergebnis der Steuereinrichtung - vorzugsweise in Form elektrischer Signale - zuleiten. Ein Drucksensor könnte auch an einem Ventil angeordnet sein. Die Steuereinrichtung ihrerseits könnte die Ventile bzw. das Ventil der jeweiligen Kammer ansteuern und entweder mit der Umgebung oder mit der Druckquelle verbinden, so dass der Druck in einer oder in beiden Kammern variiert werden kann.

Ganz besonders bevorzugt ist die Druckquelle der Reifendruckeinstellanlage selektiv mit mindestens einer Kammer verbindbar. Im Fall einer Verbindung einer Kammer mit der Druckquelle wird die entsprechende Kammer befüllt. Eine simultane Verbindung der beiden Kammern mit der Druckquelle könnte ebenfalls vorgesehen sein, um nämlich beide Kammern gleichzeitig zu befüllen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigen
- Fig. 1: in einer schematischen Querschnittsdarstellung ein Ausführungsbeispiel der vorliegenden Erfindung in einem ersten Zustand und
- Fig. 2: in einer schematischen Querschnittsdarstellung das Ausführungsbeispiel aus Fig. 1 in einem zweiten Zustand.

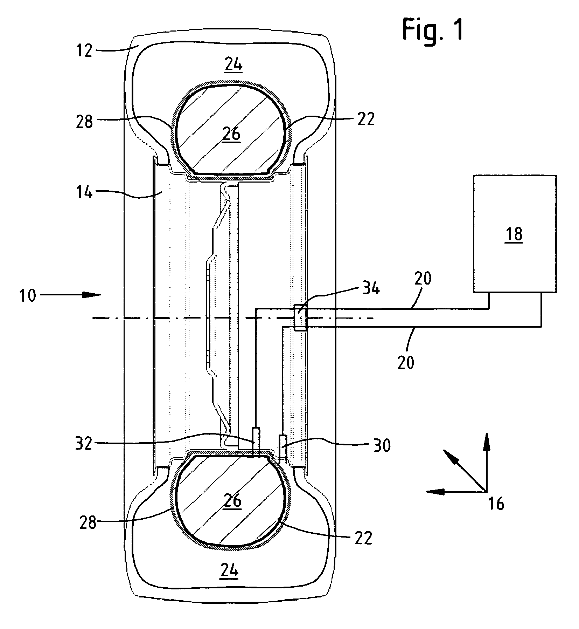

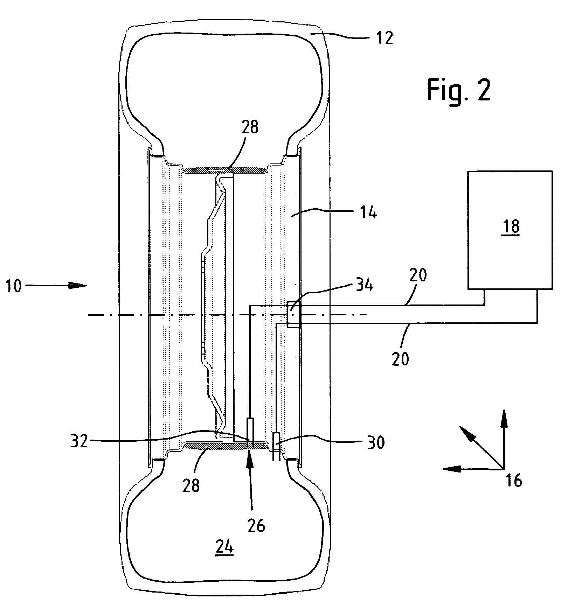

Gleiche oder ähnliche Bauteile in den Fig. 1 und 2 sind mit denselben Bezugszeichen gekennzeichnet. Fig. 1 und 2 zeigen jeweils in einer Querschnittdarstellung ein Rad 10, welches einen Reifen 12 und einen Felgen 14 aufweist. Das Rad 10 ist an einem in den Fig. 1 und 2 nicht gezeigten Fahrzeug drehbar montiert. Es sind vier Räder 10 an dem Fahrzeug vorgesehen. Das Fahrzeug umfasst eine Reifendruckeinstellanlage 16, welche eine Druckquelle 18 aufweist. Die Druckquelle 18 ist in Form eines Kompressors ausgebildet und von einem - nicht in den Fig. 1 und 2 gezeigten - Verbrennungsmotor des Fahrzeugs antreibbar. Mit anderen Worten handelt es sich bei dem Kompressor um eine die Umgebungsluft ansaugende und komprimierende Druckluftquelle. Die Reifendruckeinstellanlage 16 umfasst Verbindungsleitungen 20, mit welchen die Druckquelle 18 mit dem Reifen 12 bzw. mit dem Rad 10 verbunden ist.

Der Reifen 12 weist Unterteilungsmittel 22 auf, mit welchem das Reifenvolumen in zwei Kammern 24, 26 unterteilbar ist. Das Unterteilungsmittel 22 ist in Form eines Schlauchs ausgebildet, welcher aus einem elastischen Material besteht, nämlich aus Gummi. In dem in Fig. 1 gezeigten Zustand des Unterteilungsmittels 22 ist erkennbar, dass das Unterteilungsmittel 22 im Wesentlichen torusförmig ausgebildet ist. Das Unterteilungsmittel 22 ist an der Felge 14 angeordnet.

Erfindungsgemäß ist ein Begrenzungsmittel 28 vorgesehen, mit welchem die Volumenausdehnung der Kammer 26 auf einen vorgebbaren Volumenwert nach oben begrenzbar ist. Das Begrenzungsmittel 28 hat in dem in Fig. 1 gezeigten Zustand seine maximale Größe erreicht. Demgemäß kann sich das Volumen der Kammer 26 nicht über den in Fig. 1 gezeigten Zustand ausdehnen, obwohl dies unter Umständen aufgrund der in den Kammern 24, 26 vorherrschenden Druckverhältnissen ohne ein vorgesehenes Begrenzungsmittel 28 aufgrund der elastischen Eigenschaften des Unterteilungsmittels 22 möglich wäre.

Es ist bei dem Reifen 12 vorgesehen, dass der in der Kammer 26 vorherrschende Druck im Wesentlichen unverändert bleibt und ungefähr dem Reifendruck für eine Straßenfahrt entspricht. Zur Veränderung des Drucks im Reifen wird daher lediglich der Druck der äußeren Kammer 24 verändert. Hierzu wird entweder die Luft aus der Kammer 24 zumindest teilweise abgelassen oder mit der Druckquelle 18 über die Verbindungsleitung 20 mit Luft befüllt.

Das Begrenzungsmittel 28 selbst weist ein Gewebe einer vorgebbaren maximalen Größe auf und umgibt das Unterteilungsmittel 22 vollständig. Somit ist auch das Begrenzungsmittel 28 zumindest in dem in Fig. 1 gezeigten Zustand torusförmig ausgebildet.

Die Kammer 24 ist über das Ventil 30 und der ersten Verbindungsleitung 20 mit der Druckquelle 18 verbunden. Die Kammer 26 ist über das Ventil 32 und der zweiten Verbindungsleitung 20 mit der Druckquelle 18 verbunden. Obwohl der Druck in Kammer 26 nahezu unverändert bleiben soll, ist in dem Ausführungsbeispiel gemäß den Fig. 1 und 2 auch dieser Kammer das Ventil 32 nebst der zweiten Verbindungsleitung 20 zugeordnet, so dass erforderlichenfalls auch der Luftdruck in dieser Kammer 26 mit der Reifendruckeinstellanlage 16 variiert werden kann. Lediglich schematisch ist eine Drehdurchführung bzw. Drehverbindung 34 angedeutet, welche den mit dem Felgen 14 rotierenden Teil der Verbindungsleitungen 20 mit den am Fahrzeug fest angebauten Teil der Verbindungsleitungen 20 verbindet.

Fig. 2 zeigt das Rad 10 in einem Zustand, bei welchem die Kammer 26 nahezu luftleer ist, in welchem also die Luft aus der Kammer 26 über das Ventil 32 abgelassen wurde.

## Patentansprüche

1. Reifendruckeinstellanlage zum Einstellen des Drucks eines an einem Fahrzeug montierten Reifens, mit einer dem Fahrzeug zugeordneten Druckquelle (18) und mindestens einer Verbindungsleitung (20), mit welcher die Druckquelle (18) mit einem Reifen (12) verbindbar ist, wobei der Reifen (12) auf einer Felge (14) montierbar ist, wobei innerhalb des von dem Reifen (12) und der Felge (14) gebildeten Raums ein Unterteilungsmittel (22) vorgesehen ist, mit welchem dieser Raum in zwei Kammern (24, 26) unterteilbar ist, **dadurch gekennzeichnet, dass** ein Begrenzungsmittel (28) vorgesehen ist, mit welchem eine Volumenausdehnung einer Kammer (26) auf einen vorgebbaren maximalen Volumenwert begrenzbar ist, und dass zur Veränderung des Drucks eines Reifens (12) lediglich der Druck in einer der zwei Kammern (24) zu verändern ist.

2. Reifendruckeinstellanlage nach Anspruch 1, **dadurch gekennzeichnet, dass** das Unterteilungsmittel (22) einen Schlauch aufweist, welcher vorzugsweise aus einem elastischen Material, insbesondere aus Gummi, und/oder aus einem luftdichten Gewebematerial gefertigt ist.

3. Reifendruckeinstellanlage nach Anspruch 1, **dadurch gekennzeichnet, dass** das Unterteilungsmittel (22) ein Vollmaterial aufweist, welches vorzugsweise aus einem elastischen Material, insbesondere aus Gummi, gefertigt ist, und dass das Vollmaterial Poren aufweisen oder schwammförmig ausgebildet sein kann.

4. Reifendruckeinstellanlage nach einem der Ansprüche 1 bis 3, **dadurch gekennzeichnet, dass** das Unterteilungsmittel (22) im Wesentlichen torusförmig ausgebildet ist und/oder an der Felge (14) angeordnet und/oder befestigbar ist.

5. Reifendruckeinstellanlage nach einem der Ansprüche 1 bis 4, **dadurch gekennzeichnet, dass** das Begrenzungsmittel (28) ein Netz oder ein Gewebe einer vorgebbaren maximalen Größe aufweist, und dass das Unterteilungsmittel (22) zumindest bereichsweise von dem Begrenzungsmittel (28) umgebbar ist.

6. Reifendruckeinstellanlage nach einem der Ansprüche 1 bis 5, **dadurch gekennzeichnet, dass** in einer durch das Unterteilungsmittel (22) gebildeten Kammer (26) der Druck im Wesentlichen unverändert bleibt und vorzugsweise einem für eine Straßenfahrt üblichen Reifendruck entspricht, wobei die Kammer (26) mit dem im Wesentlichen unveränderten Druck an der Felge (14) angeordnet sein könnte.

7. Reifendruckeinstellanlage nach einem der Ansprüche 1 bis 6, **dadurch gekennzeichnet, dass** eine Veränderung des Reifendrucks durch ein Befüllen oder Entleeren der zwischen dem Unterteilungsmittel (22) und dem Reifen (12) angeordneten Kammer (24) erzielbar ist.

8. Reifendruckeinstellanlage nach einem der Ansprüche 1 bis 7, **dadurch gekennzeichnet, dass** zur Veränderung des Reifendrucks oder der Druckverhältnisse in den zwei Kammern (24, 26) Luft aus der einen Kammer (24, 26) in die andere Kammer (26, 24) leitbar ist.

9. Reifendruckeinstellanlage nach einem der Ansprüche 1 bis 8, **dadurch gekennzeichnet, dass** mindestens einer Kammer (24, 26) ein Ventil (30, 32) zugeordnet ist, über welches der Druck in der jeweiligen Kammer (24, 26) veränderbar ist.

10. Reifendruckeinstellanlage nach einem der Ansprüche 1 bis 9, **dadurch gekennzeichnet, dass** die Druckquelle (18) der Reifendruckeinstellanlage (16) selektiv mit mindestens einer Kammer (24, 26) verbindbar ist, vorzugsweise auch simultan.

## Claims

1. Tyre pressure adjustment unit for adjusting the pressure of a tyre which is mounted on a vehicle, having a pressure source (18) which is associated with the vehicle and at least one connecting line (20) with which the pressure source (18) can be connected to a tyre (12), the tyre (12) being mountable on a wheel rim (14), a sub-dividing means (22) being provided within the space formed by the tyre (12) and the wheel rim (14), with which this space can be sub-divided into two chambers (24, 26), **characterised in that** a delimitation means (28) is provided with which a volume expansion of one chamber (26) can be delimited to a prescribable maximum volume value and **in that**, in order to change the pressure of a tyre (12), merely the pressure in one of the two chambers (24) requires to be changed.

2. Tyre pressure adjustment unit according to claim 1, **characterised in that** the sub-dividing means (22) has a hose which is manufactured preferably from an elastic material, in particular rubber, and/or an air-tight woven fabric.

3. Tyre pressure adjustment unit according to claim 1, **characterised in that** the sub-dividing means (22) has a solid material which is manufactured preferably from an elastic material, in particular rubber, and **in that** the solid material can have pores or a porous configuration.

4. Tyre pressure adjustment unit according to one of the claims 1 to 3, **characterised in that** the sub-dividing means (22) has a substantially toroidal configuration and/or is disposed and/or can be attached on the wheel rim (14).

5. Tyre pressure adjustment unit according to one of the claims 1 to 4, **characterised in that** the delimitation means (28) has a net or a woven fabric of a prescribable maximum size, and **in that** the sub-dividing means (22) can be surrounded at least in regions by the delimitation means (28).

6. Tyre pressure adjustment unit according to one of the claims 1 to 5, **characterised in that** the pressure in one chamber (26) which is formed by the sub-dividing means (22) remains substantially unchanged and preferably corresponds to a tyre pressure which is normal for road travel, the chamber (26) with the substantially unchanged pressure being able to be disposed on the wheel rim (14).

7. Tyre pressure adjustment unit according to one of the claims 1 to 6, **characterised in that** a change in the tyre pressure can be achieved by inflating or deflating the chamber (24) which is disposed between the sub-dividing means (22) and the tyre (12).

8. Tyre pressure adjustment unit according to one of the claims 1 to 7, **characterised in that**, in order to change the tyre pressure or the pressure ratios in the two chambers (24, 26), air from the one chamber (24, 26) can be directed into the other chamber (26, 24).

9. Tyre pressure adjustment unit according to one of the claims 1 to 8, **characterised in that** a valve (30, 32) is associated with at least one chamber (24, 26), via which valve the pressure in the respective chamber (24, 26) can be changed.

10. Tyre pressure adjustment unit according to one of the claims 1 to 9, **characterised in that** the pressure source (18) of the tyre pressure adjustment unit (16) can be connected selectively to at least one chamber (24, 26), preferably also simultaneously.

## Revendications

1. Dispositif de réglage de la pression des pneus, destiné à régler la pression d'un pneu monté sur un véhicule, comportant une source de pression (18), associée au véhicule, et au moins une conduite de liaison (20), par laquelle la source de pression (18) peut être reliée au pneu (12), le pneu (12) étant propre à être monté sur une jante (14), sachant qu'à l'intérieur de l'espace formé entre le pneu (12) et la jante (14) est prévu un moyen de séparation (22), par lequel cet espace est divisé en deux chambres (24, 26), **caractérisé en ce qu'**il est prévu un moyen de limitation (28), par lequel une extension de volume à l'intérieur d'une chambre (26) peut être limitée à une valeur maximale prédéfinissable, et **en ce que** pour modifier la pression d'un pneu (12) il suffit de modifier la pression à l'intérieur de l'une des deux chambres (24).

2. Dispositif de réglage de la pression des pneus selon la revendication 1, **caractérisé en ce que** le moyen de séparation (22) comporte un tuyau flexible, qui est réalisé de préférence dans un matériau élastique, en particulier en caoutchouc, et/ou dans un matériau textile étanche à l'air.

3. Dispositif de réglage de la pression des pneus selon la revendication 1, **caractérisé en ce que** le moyen de séparation (22) comporte un matériau plein, qui est réalisé de préférence dans un matériau élastique, en particulier en caoutchouc, et **en ce que** le matériau plein comporte des pores ou peut être réalisé en matériau spongieux.

4. Dispositif de réglage de la pression des pneus selon l'une quelconque des revendications 1 à 3, **caractérisé en ce que** le moyen de séparation (22) est réalisé sensiblement en forme de tore et/ou est disposé contre la jante (14) et/ou peut être fixé contre celle-ci.

5. Dispositif de réglage de la pression des pneus selon l'une quelconque des revendications 1 à 4, **caractérisé en ce que** le moyen de séparation (22) comporte un treillis ou un textile avec une dimension maximale prédéfinissable, et **en ce que** le moyen de séparation (22) peut être entouré au moins en partie par le moyen de limitation (28).

6. Dispositif de réglage de la pression des pneus selon l'une quelconque des revendications 1 à 5, **caractérisé en ce que**, dans une chambre (26) formée par le moyen de séparation (22), la pression reste sensiblement invariable et correspond de préférence à une pression de pneu usuelle pour un déplacement sur la route, la chambre (26), avec la pression sensiblement invariable, pouvant être agencée sur la jante (14).

7. Dispositif de réglage de la pression des pneus selon l'une quelconque des revendications 1 à 6, **caractérisé en ce qu'**une modification de la pression du pneu peut être obtenue par le remplissage ou le vidage de la chambre (24), disposée entre le moyen de séparation (22) et le pneu (12).

8. Dispositif de réglage de la pression des pneus selon l'une quelconque des revendications 1 à 7, **caractérisé en ce qu'**une modification de la pression du pneu ou les conditions de pression dans les deux chambres (24, 26) peut être réalisée par le guidage de l'air guidé hors de l'une des chambres (24, 26) vers l'autre chambre (26, 24).

9. Dispositif de réglage de la pression des pneus selon l'une quelconque des revendications 1 à 8, **caractérisé en ce qu'**à au moins une chambre (24, 26) est associée une valve (30, 32), par laquelle il est possible de faire varier la pression dans chacune des chambres (24, 26).

10. Dispositif de réglage de la pression des pneus selon l'une quelconque des revendications 1 à 9, **caractérisé en ce que** la source de pression (18) du dispositif de réglage de la pression des pneus (16) peut être reliée au choix à au moins une chambre (24, 26), de préférence aussi simultanément.
